# EUROPEAN PATENT SPECIFICATION

(11) **EP 3 133 770 B1**
(45) Date of publication and mention of the grant of the patent: **14.11.2018**
(21) Application number: 14895443.1
(22) Date of filing: 18.08.2014
(51) Int. Cl.: H04L 12/18, H04L 12/28, H04L 29/12, H04L 12/66

(54) **HOME GATEWAY DS-LITE MULTICAST METHOD AND DEVICE**
HOME-GATEWAY-DS-LITE-MULTICAST-VERFAHREN UND -VORRICHTUNG
PROCÉDÉ ET DISPOSITIF DE MULTIDIFFUSION DS-LITE DE PASSERELLE LOCALE

(30) Priority: 16.06.2014 CN 201410268384
(43) Date of publication of application: 22.02.2017
(73) Proprietor: ZTE Corporation, Shenzhen, Guangdong 518057 (CN)
(72) Inventor: CHEN, Hui, Shenzhen Guangdong 518057 (CN)
(74) Representative: Regimbeau
(86) International application number: PCT/CN2014/084670
(87) International publication number: WO 2015/192457

(56) References cited:
- EP-A2- 1 161 028
- CN-A- 101 068 226
- CN-A- 102 387 221
- CN-A- 102 546 382
- CN-A- 102 546 382
- CN-A- 102 780 567
- US-A1- 2012 218 910

## Description

### TECHNICAL FIELD

The present disclosure relates to the field of communication technologies, and in particular, to a home gateway Dual Stack Lite (DS-Lite) multicast method and device.

### BACKGROUND

Internet Protocol Version 6 (IPv6) is considered as a core of a next generation Internet, and is valued and promoted by governments and various major operators, and IPv4 is a fourth edition of Internet Protocol (IP). In an evolution process of transiting to the IPv6, there are a variety of transition schemes including dual stack, translation and tunnel technologies. The dual stack technology is to run two protocol stacks, including the IPv4 and the IPv6, in a same system at a same time, where the DS-Lite is a very effective dual stack transition technology. It is an important and unavoidable issue in the transition technology on how to enable a user achieve a variety of services in the DS-Lite transition technology like in the pure IPv4 network environment.

At present, the related art merely describes a multicast network architecture in the DS-Lite; however, users connected to the home gateway cannot realize multicast services in the DS-Lite network architecture.

Document CN 102546382A relates to a method for realizing multicast in an IPv4 over IPv6 tunnel. Specifically, the user gateway IGMP multicast join request message to the IPv6 tunnel encapsulation transmission, the multicast address according to the mapping relationship set IGMP multicast group join IPv4 multicast group request message carry band; the address is mapped to the IPv6 multicast group address.

Document EP 1161028A2 proposes a method of executing the IP multicast communication between the IPv4 terminal and the IPv6 terminal, in which the converting apparatus positioned between an IPv4 network and an IPv6 network executes the IP header conversion mutually between an IPv4 multicast packet and an IPv6 multicast packet; the IP address conversion table holds the IPv4 multicast addresses and the IPv6 multicast addresses in correspondence with each other.

### SUMMARY

The present invention is defined in the appended independent claims to which reference should be made. Advantageous features are set out in the appended dependent claims. Any embodiments and/or examples disclosed in the following description and which are not covered by the appended claims, are considered as not being part of the present invention.

### BRIEF DESCRIPTION OF THE DRAWINGS

FIG. 1 is a flow chart illustrating a home gateway DS-Lite multicast method provided by a first embodiment of the present invention;
FIG. 2 is a schematic diagram illustrating converting an IPv4 multicast address to an IPv6 multicast address in a first embodiment of the present invention;
FIG. 3 is a schematic diagram illustrating constitution of a home gateway in a second embodiment of the present invention;
FIG. 4 is a schematic diagram illustrating a DS-Lite tunnel module 30 processing message in a second embodiment of the present invention;
FIG. 5 is a processing flow chart illustrating adding a message to the DS-Lite multicast protocol in a second embodiment of the present invention;
FIG. 6 is a processing flow chart illustrating exiting a message by the DS-Lite multicast protocol in a second embodiment of the present invention;
FIG. 7 is a flow chart illustrating processing and forwarding a DS-Lite multicast data message in a second embodiment of the present invention;
FIG. 8 is a schematic diagram illustrating an application embodiment of the present invention.

### DETAILED DESCRIPTION

In order to further illustrate the technical means adopted by the present disclosure to achieve the intended purpose and the efficacy, the present disclosure is further explained in details by combining with the accompanying drawings and embodiments as follows. The first embodiment of the present invention is a home gateway DS-Lite multicast method.

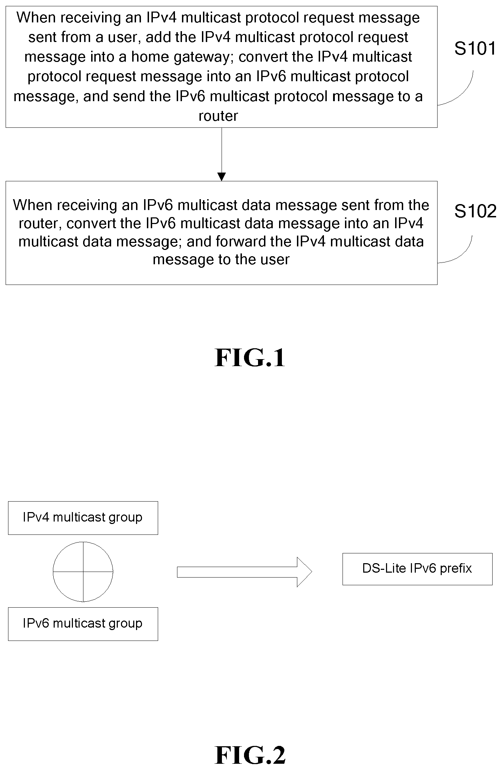

FIG. 1 is a flow chart illustrating a home gateway DS-Lite multicast method provided by the first embodiment of the present invention.

As shown in FIG. 1, in the home gateway DS-Lite multicast method provided by the present disclosure, procedures executed by the home gateway include following specific steps.

In step S101, when receiving an IPv4 multicast protocol request message sent from a user, the IPv4 multicast protocol request message is added into a home gateway; the IPv4 multicast protocol request message is converted into an IPv6 multicast protocol message and the IPv6 multicast protocol message is sent to a router.

Specifically, in the DS-Lite network architecture, when the user needs to receive multicast data, the user sends a multicast IPv4 Internet Group Management Protocol (IGMP) to add the message to the home gateway. The home gateway receives the IPv4 multicast protocol message sent by the user, and the IPv4 multicast protocol message is added to the home gateway. The user refers to a terminal device used by the user.

The home gateway parses the received IPv4 multicast protocol message so as to obtain an IPv4 multicast address. An IPv6 multicast address is obtained by calculation according to the obtained IPv4 multicast address and a DS-Lite multicast prefix. FIG. 2 is a schematic diagram illustrating converting the IPv4 multicast address to the IPv6 multicast address, where a prefix of the DS-Lite IPv6 serves as a prefix of the IPv6, and the IPv4 multicast address serves as a latter part of the address, so as to obtain the IPv6 multicast address. For example, the prefix of the DS-Lite IPv6 is: ffxx:abc::, and the IPv4 multicast address is: 230.1.1.1, then the composed IPv6 multicast address is: ffxx:abc::230.1.1.1.

The multicast address of the IPv6 is set in the home gateway, and the IPv6 multicast protocol message is obtained according to the IPv6 multicast address. The IPv6 multicast protocol message is sent to the router through a WAN side of the home gateway.

In step S102, when receiving an IPv6 multicast data message sent from the router, the IPv6 multicast data message is converted into an IPv4 multicast data message; and the IPv4 multicast data message is forwarded to the user.

Specifically, the IPv6 multicast data message, which is sent from the router, received by a WAN port of the home gateway is specifically an IPIP multicast data message. The home gateway processes the IPv6 multicast data message, such as regrouping fragmented messages, converting the IPv6 multicast data message into an IP message and setting a device.

In addition, if the IPIP multicast data message is a fragmented message, then the fragments are regrouped, and an IPv6 message header is removed from the IPIP multicast data message. If the IPIP multicast data message is not a fragmented message, there is no need to regroup directly; however, the IPv6 header of the IPIP multicast data message is directly removed and the IPIP multicast data message is converted to an IPv4 message, device information in the message is modified as DS-Lite device, and then the message is forwarded.

In addition, the home gateway DS-Lite multicast method provided by the present disclosure further includes:
receiving, when the IPv4 multicast protocol message exits the home gateway, an IPv4 multicast protocol message sent by the user, parsing the IPv4 multicast protocol message as a IPv4 multicast address, and obtaining an IPv6 multicast address according to the IPv4 multicast address and a DS-Lite multicast prefix, setting the IPv6 multicast address in the home gateway; and, sending an IPv6 exit message to the router and deleting a routing item of a multicast group by the home gateway, where the multicast group is achieved through a corresponding routing item in practical application.

The second embodiment of the present invention is a home gateway.

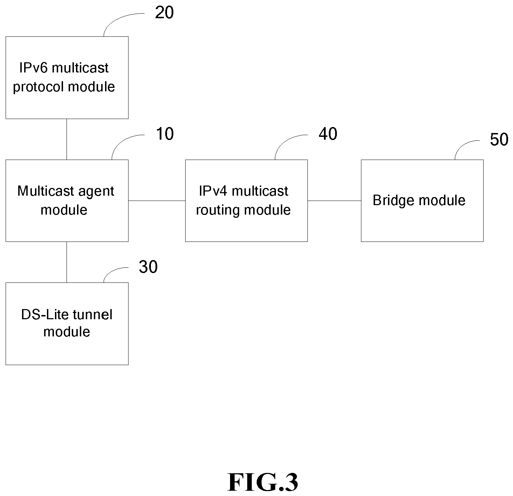

FIG. 3 is a schematic diagram illustrating constitution of a home gateway in a second embodiment of the present invention.

As shown in FIG. 3, the home gateway provided by the present disclosure includes: a multicast agent module 10, an IPv6 multicast protocol module 20, a DS-Lite tunnel module 30, an IPv4 multicast routing module 40 and a bridge module 50.

The multicast agent module 10 is configured to receive an IPv4 multicast protocol request message sent from a user, and add the IPv4 multicast protocol request message to the home gateway.

The IPv6 multicast protocol module 20 is configured to convert the IPv4 multicast protocol request message into an IPv6 multicast protocol message, and send the IPv6 multicast protocol message to a router.

The DS-Lite tunnel module 30 is configured to convert, after receiving an IPv6 multicast data message sent from the router, the IPv6 multicast data message into an IPv4 multicast data message.

The IPv4 multicast routing module 40 is configured to add or delete a multicast routing item by setting, and forward the IPv4 multicast data message by routing.

The bridge module 50 is configured to receive the multicast data message forwarded by the IPv4 multicast routing module, and forward the IPv4 multicast data message to the user.

Specifically, in the DS-Lite network architecture, when the user needs to receive multicast data, the user sends a multicast IPv4 protocol message IGMP to add the message to the home gateway. The home gateway receives the IPv4 multicast protocol message sent by the user, and the IPv4 multicast protocol message is added to the multicast agent module 10 of the home gateway. After receiving the IPv4 add message, the multicast agent module 10 of the home gateway performs parsing and obtains an IPv4 multicast address. An IPv6 multicast address is obtained by calculation according to the obtained IPv4 multicast address and a DS-Lite multicast prefix. The specific calculation method refers to FIG. 2. FIG. 2 is a schematic diagram illustrating converting the IPv4 multicast address to the IPv6 multicast address. The IPv6 multicast address can be obtained by adding a DS-Lite multicast prefix before the IPv4 multicast address, where, a prefix of the DS-Lite IPv6 serves as a prefix of the IPv6, and the IPv4 multicast address serves as a latter part of the address, so as to obtain the IPv6 multicast address. For example, the prefix of the DS-Lite IPv6 is: ffxx:abc::, and the IPv4 multicast address is: 230.1.1.1, then the composed IPv6 multicast address is: ffxx:abc::230.1.1.1.

The IPv6 multicast address obtained by calculation is set on the IPv6 multicast protocol module 20, and the multicast protocol module 20 sends an IPv6 add message to the router.

The multicast agent module 10 sets a routing item for adding multicast to the IPv4 multicast routing module 40.

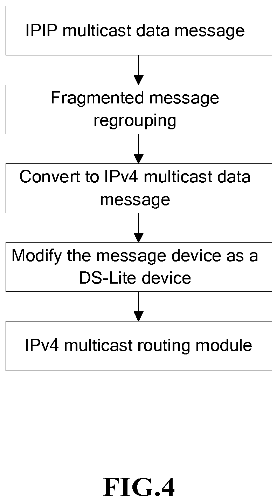

During forwarding the multicast data message, the router sends the IPIP multicast data message to the DS-Lite tunnel module 30 of the home gateway. The DS-Lite tunnel module 30 of the home gateway processes the IPIP message, so as to obtain the IPv4 multicast data message. A specific processing includes: regrouping fragmented messages, converting the IPIP message to an IP message and setting the device, etc., referring to FIG. 4.

In addition, if the IPIP multicast data message is a fragmented message, then the DS-Lite tunnel module 30 performs fragment regrouping to the received IPIP multicast data message, and removes the IPv6 message header from the IPIP multicast data message. If the IPIP multicast data message is not a fragmented message, there is no need to regroup directly; however, the IPv6 header of the IPIP multicast data message is directly removed and the IPIP multicast data message is converted to an IPv4 message, device information in the message is modified as DS-Lite device, and then the message is forwarded.

The obtained IPv4 multicast data message is sent to the IPv4 multicast routing module 40 for forwarding by routing, the IPv4 multicast data message is forwarded to the bridge module 50, and the IPv4 multicast data message is forwarded to the user according to study situation of the bridge module 50.

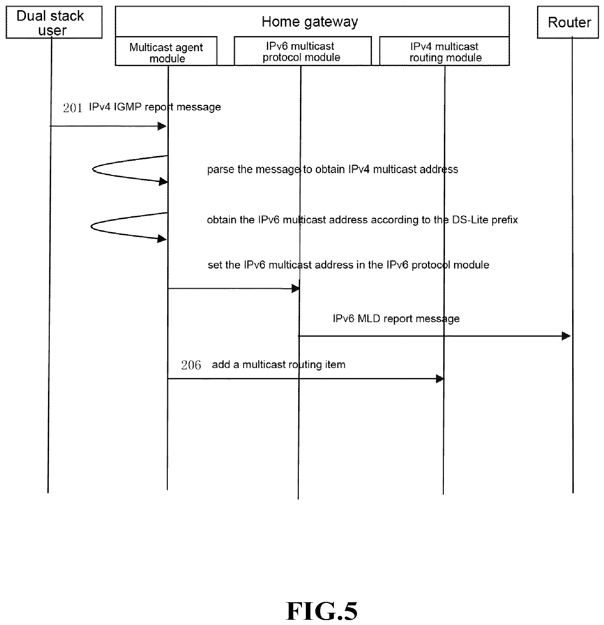

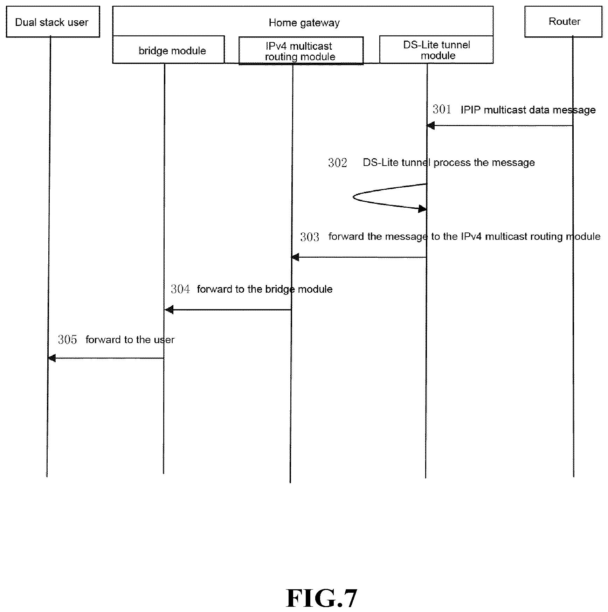

Further, FIG. 5 ∼ FIG. 7 respectively illustrate processing procedures of adding a message to the DS-Lite multicast protocol, and exiting a message from the DS-Lite multicast protocol, as well as processing and forwarding procedures of the DS-Lite multicast data message.

As shown in FIG. 5, in the DS-Lite network architecture, when the user needs to receive multicast data, the user sends a multicast IPv4 protocol message IGMP to add the message to the home gateway. The home gateway receives the IPv4 multicast protocol request message sent by the user, and the IPv4 multicast protocol message is added to the multicast agent module of the home gateway. After receiving the IPv4 multicast protocol request message, the multicast agent module of the home gateway performs parsing and obtains an IPv4 multicast address. An IPv6 multicast address is obtained by calculation according to the obtained IPv4 multicast address and a DS-Lite multicast prefix. The specific calculation method refers to FIG. 2. FIG. 2 is a schematic diagram illustrating converting the IPv4 multicast address to the IPv6 multicast address. The IPv6 multicast address can be obtained by adding a DS-Lite multicast prefix before the IPv4 multicast address, where a prefix of the DS-Lite IPv6 serves as a prefix of the IPv6, and the IPv4 multicast address serves as a latter part of the address, so as to obtain the IPv6 multicast address. The IPv6 multicast address which obtained by calculation is set in the IPv6 multicast protocol module, and the multicast protocol module sends the IPv6 add message to the router. The multicast agent module sets a routing item for adding multicast to the IPv4 multicast routing module.

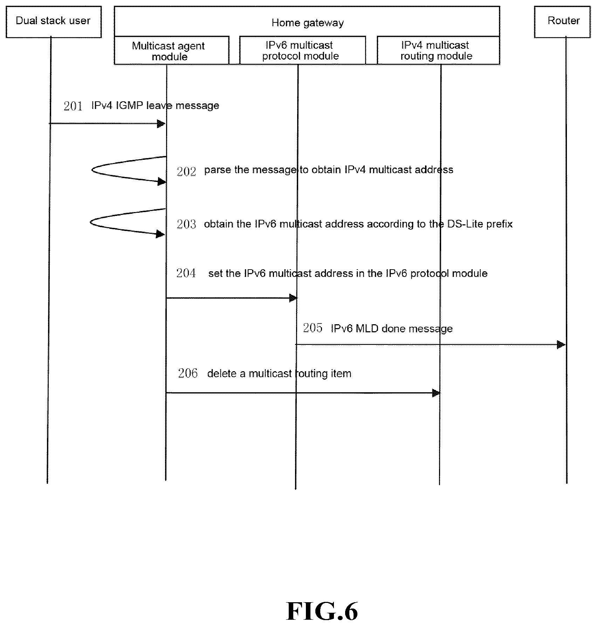

As shown in FIG. 6, when the user needs to exit the multicast data, the user sends a multicast IPv4 protocol message IGMP to add the message to the home gateway. The home gateway receives the IPv4 multicast protocol exit message, or referred as an IPv4 multicast protocol leave message, sent by the user. The IPv4 multicast protocol exit message is added into the multicast agent module of the home gateway. After receiving the IPv4 multicast protocol exit message, the multicast agent module of the home gateway perform parsing, so as to obtain the IPv4 multicast address, and obtain the IPv6 multicast address according to the IPv4 multicast address and the DS-Lite multicast prefix; and, the IPv6 multicast address is set in the home gateway, and the home gateway sends the IPv6 exit message to the router, and deletes the routing item of the multicast group, where the multicast group is achieved through corresponding routing item in practical application.

As shown in FIG. 7, During forwarding the multicast data message, the router sends the IPIP multicast data message to the DS-Lite tunnel module of the home gateway. The DS-Lite tunnel module of the home gateway processes the IPIP message, so as to obtain the IPv4 multicast data message. A specific processing includes: regrouping fragmented messages, converting the IPIP message to an IP message and setting the device, etc., referring to FIG. 4.

In addition, if the IPIP multicast data message is a fragmented message, then the DS-Lite tunnel module performs fragment regrouping to the received IPIP multicast data message, and removes the IPv6 message header from the IPIP multicast data message. If the IPIP multicast data message is not a fragmented message, there is no need to regroup directly; however, the IPv6 header of the IPIP multicast data message is directly removed and the IPIP multicast data message is converted to an IPv4 message, device information in the message is modified as DS-Lite device, and then the message is forwarded. The obtained IPv4 multicast data message is sent to the IPv4 multicast routing module for forwarding by routing, the IPv4 multicast data message is forwarded to the bridge module, and the IPv4 multicast data message is forwarded to the user according to study situation of the bridge module.

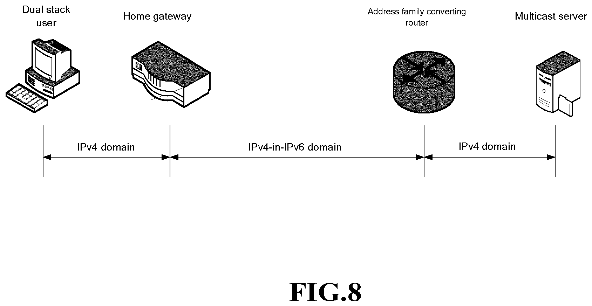

FIG. 8 is a schematic diagram illustrating an application embodiment of the present invention.

As shown in FIG. 8, in a DS-Lite multicast application scene, when the user needs to receive multicast data, the user sends a multicast IPv4 protocol message IGMP to add the message to the home gateway. The home gateway receives the IPv4 multicast protocol message sent by the user, converts the IPv4 multicast protocol message into the IPv6 multicast protocol message, and sends the IPv6 multicast protocol message to an address family converting router through the WAN port of the home gateway. The address family converting router is connected to a multicast server through an IPv4 domain, the home gateway is connected to the address family converting router through two protocols simultaneously run in IPv4 and IPv6 domains, and the user is connected to the home gateway through the IPv4 domain.

After the WAN port of the home gateway receives an IPv6 multicast data message sent from the router, the IPv6 multicast data message is converted into an IPv4 multicast data message. And the IPv4 multicast data message is forwarded to the user through the LAN port of the home gateway.

It should be noted that a user using a dual stack is taken as an example for the user in all embodiments of the present invention, to while the present disclosure is not limited.

By adopting the home gateway DS-Lite multicast method and device of the present disclosure, the home gateway enables connected users to effectively realize multicast services in a DS-Lite network architecture.

Through the illustration of the specific embodiments, it should be able to deeply and specifically understand the technical means, adopted by the present disclosure to achieve the intended purpose, and the effects, however, the accompanying figures are only used for providing reference and illustration rather than limiting the present disclosure.

### INDUSTRIAL PRACTICABILITY

Above schemes provided by the present disclosure can be applied in a home gateway DS-Lite multicast process, the home gateway enables connected users to effectively realize multicast services in a DS-Lite network architecture.

## Claims

1. A home gateway dual stack lite, DS-Lite, multicast method, the method comprising:
adding (S101), when receiving an Internet Protocol Version 4, IPv4, multicast protocol request message sent from a user, the IPv4 multicast protocol request message to a home gateway; converting the IPv4 multicast protocol request message into an Internet Protocol Version 6, IPv6, multicast protocol message and sending the IPv6 multicast protocol message to a router;
converting (S102), when receiving an IPv6 multicast data message sent from the router, the IPv6 multicast data message into an IPv4 multicast data message; and forwarding the IPv4 multicast data message to the user,
wherein the converting the IPv4 multicast protocol request message into an IPv6 multicast protocol message comprises: parsing the IPv4 multicast protocol request message to obtain an IPv4 multicast address; obtaining an IPv6 multicast address according to the IPv4 multicast address and a DS-Lite multicast prefix; and obtaining an IPv6 multicast protocol message according to the IPv6 multicast address,
wherein the converting the IPv6 multicast data message into an IPv4 multicast data message comprises: removing an IPv6 message header of the IPv6 multicast data message, to obtain the IPv4 multicast data message.

2. The method according to claim 1, further comprising:
receiving (201) an IPv4 multicast protocol exit message sent by the user;
parsing (202) the IPv4 multicast protocol exit message to obtain an IPv4 multicast address;
obtaining (203) an IPv6 multicast address according to the IPv4 multicast address and a DS-Lite multicast prefix; and
deleting (206) a multicast group corresponding to an IPv4 multicast address that the user needs to exit, and informing the router of a multicast group corresponding to an IPv6 multicast address that the user exits.

3. The method according to claim 1 or 2, before converting the IPv6 multicast data message into the IPv4 multicast data message, further comprising: performing, when the IPv6 multicast data message is a fragmented message, fragment regrouping to the IPv6 multicast data message.

4. A home gateway comprising:
a multicast agent module (10), configured to add, when receiving an Internet Protocol Version 4, IPv4, multicast protocol request message sent from a user, the IPv4 multicast protocol request message to the home gateway;
an Internet Protocol Version 6, IPv6, multicast protocol module (20), configured to convert the IPv4 multicast protocol request message into an IPv6 multicast protocol message, and send the IPv6 multicast protocol message to a router; and
a dual stack lite, DS-Lite, tunnel module (30), configured to convert, when receiving an IPv6 multicast data message sent from the router, the IPv6 multicast data message into an IPv4 multicast data message,
wherein in the conversion of the IPv4 multicast protocol request message into the IPv6 multicast protocol message, the IPv6 multicast protocol module (20) is configured to parse the IPv4 multicast protocol request message to obtain an IPv4 multicast address, obtain an IPv6 multicast address according to the IPv4 multicast address and a DS-Lite multicast prefix, and obtain an IPv6 multicast protocol message according to the IPv6 multicast address,
wherein in the conversion of the IPv6 multicast data message into an IPv4 multicast data message, the DS-Lite tunnel module (30) is configured to remove an IPv6 message header of the IPv6 multicast data message, to obtain the IPv4 multicast data message.

5. The home gateway according to claim 4, further comprising:
an IPv4 multicast routing module (40), configured to add or delete a multicast routing item, and forward the IPv4 multicast data message by routing; and
a bridge module (50), configured to receive the multicast data message forwarded by the IPv4 multicast routing module (40), and forward the IPv4 multicast data message to the user.

6. The home gateway according to claim 4, wherein, the multicast agent module (10) is further configured to receive an IPv4 multicast protocol exit message sent by the user; parse the IPv4 multicast protocol exit message to obtain an IPv4 multicast address; and obtain an IPv6 multicast address according to the IPv4 multicast address and a DS-Lite multicast prefix.

7. The home gateway according to claim 4, wherein, the IPv6 multicast protocol module (20) is further configured to receive the IPv6 multicast address sent by the multicast agent module (10).

8. The home gateway according to claim 4, wherein, the DS-Lite tunnel module (30) is further configured to send the IPv4 multicast data message to the IPv4 multicast routing module (40).

## Patentansprüche

1. Home-Gateway-Dual-Stack-Lite-(DS)-Multicast-Verfahren, wobei das Verfahren Folgendes umfasst:
Hinzufügen (S101), wenn eine von einem Nutzer gesendete Internet-Protokoll-Version-4-(IPv4)-Multicast-Protokollanforderungsnachricht empfangen wird, der IPv4-Multicast-Protokollanforderungsnachricht zu einem Home-Gateway; Umwandeln der IPv4-Multicast-Protokollanforderungsnachricht in eine Internet-Protokoll-Version-6-(IPv6)-Multicast-Protokollnachricht und Senden der IPv6-Multicast-Protokollnachricht an einen Router;
Umwandeln (S102), wenn eine vom Router gesendete IPv6-Multicast-Datennachricht empfangen wird, der IPv6-Multicast-Datennachricht in eine IPv4-Multicast-Datennachricht; und Weiterleiten der IPv4-Multicast-Datennachricht an den Nutzer,
wobei das Umwandeln der IPv4-Multicast-Protokollanforderungsnachricht in eine IPv6-Multicast-Protokollnachricht umfasst: Analysieren der IPv4-Multicast-Protokollanforderungsnachricht, um eine IPv4-Multicast-Adresse zu erlangen; Erlangen einer IPv6-Multicast-Adresse gemäß der IPv4-Multicast-Adresse und einem DS-Lite-Multicast-Präfix; und Erlangen einer IPv6-Multicast-Protokollnachricht gemäß der IPv6-Multicast-Adresse,
wobei das Umwandeln der IPv6-Multicast-Datennachricht in eine IPv4-Multicast-Datennachricht umfasst: Entfernen eines IPv6-Nachrichtenheaders der IPv6-Multicast-Datennachricht, um die IPv4-Multicast-Datennachricht zu erlangen.

2. Verfahren nach Anspruch 1, ferner umfassend:
Empfangen (201) einer IPv4-Multicast-Protokoll-Exit-Nachricht, die vom Nutzer gesendet worden ist;
Analysieren (202) der IPv4-Multicast-Protokoll-Exit-Nachricht, um eine IPv4-Multicast-Adresse zu erlangen;
Erlangen (203) einer IPv6-Multicast-Adresse gemäß der IPv4-Multicast-Adresse und einem DS-Lite-Multicast-Präfix; und
Löschen (206) einer Multicast-Gruppe, die einer IPv4-Multicast-Adresse entspricht, die der Nutzer verlassen muss, und Informieren des Routers über eine Multicast-Gruppe, die einer IPv6-Multicast-Adresse entspricht, die der Nutzer verlässt.

3. Verfahren nach Anspruch 1 oder 2, vor dem Umwandeln der IPv6-Multicast-Datennachricht in die IPv4-Multicast-Datennachricht, ferner umfassend: Durchführen, wenn die IPv6-Multicast-Datennachricht eine fragmentierte Nachricht ist, einer Fragment-Umgruppierung an die IPv6-Multicast-Datennachricht.

4. Home-Gateway, umfassend:
ein Multicast-Agent-Modul (10), das konfiguriert ist zum Hinzufügen, wenn eine von einem Nutzer gesendete Internet-Protokoll-Version-4-IPv4-Multicast-Protokollanforderungsnachricht empfangen wird, der IPv4-Multicast-Protokollanforderungsnachricht zum Home-Gateway;
ein Internet-Protokoll-Version-6-IPv6-Multicast-Protokoll-Modul (20), das konfiguriert ist zum Umwandeln der IPv4-Multicast-Protokollanforderungsnachricht in eine IPv6-Multicast-Protokollnachricht und Senden der IPv6-Multicast-Protokollnachricht an einen Router; und
ein Dual-Stack-Lite-(DS-Lite)-Tunnelmodul (30), das konfiguriert ist zum Umwandeln, wenn eine vom Router gesendete IPv6-Multicast-Datennachricht empfangen wird, der IPv6-Multicast-Datennachricht in eine IPv4-Multicast-Datennachricht,
wobei, beim Umwandeln der IPv4-Multicast-Protokollanforderungsnachricht in die IPv6-Multicast-Protokollnachricht, das IPv6-Multicast-Protokoll-Modul (20) konfiguriert ist zum Analysieren der IPv4-Multicast-Protokollanforderungsnachricht, um eine IPv4-Multicast-Adresse zu erlangen, eine IPv6-Multicast-Adresse gemäß der IPv4-Multicast-Adresse und einem DS-Lite-Multicast-Präfix zu erlangen und eine IPv6-Multicast-Protokollnachricht gemäß der IPv6-Multicast-Adresse zu erlangen,
wobei, beim Umwandeln der IPv6-Multicast-Datennachricht in eine IPv4-Multicast-Datennachricht, das DS-Lite-Tunnelmodul (30) konfiguriert ist zum Entfernen eines IPv6-Nachrichtenheaders der IPv6-Multicast-Datennachricht, um die IPv4-Multicast-Datennachricht zu erlangen.

5. Home-Gateway nach Anspruch 4, ferner umfassend:
ein IPv4-Multicast-Routing-Modul (40), das konfiguriert ist zum Hinzufügen oder Löschen eines Multicast-Routing-Elements und zum Weiterleiten der IPv4-Multicast-Datennachricht durch Routing; und
ein Brückenmodul (50), das konfiguriert ist zum Empfangen der vom IPv4-Multicast-Routing-Modul (40) weitergeleiteten IPv4-Multicast-Datennachricht und Weiterleiten der IPv4-Multicast-Datennachricht an den Nutzer.

6. Home-Gateway nach Anspruch 4, wobei das Multicast-Agent-Modul (10) ferner konfiguriert ist zum Empfangen einer vom Nutzer gesendeten IPv4-Multicast-Protokoll-Exit-Nachricht; Analysieren der IPv4-Multicast-Protokoll-Exit-Nachricht, um eine IPv4-Multicast-Adresse zu erlangen; und Erlangen einer IPv6-Multicast-Adresse gemäß der IPv4-Multicast-Adresse und einem DS-Lite-Multicast-Präfix.

7. Home-Gateway nach Anspruch 4, wobei das IPv6-Multicast-Protokoll-Modul (20) ferner konfiguriert ist zum Empfangen der vom Multicast-Agent-Modul (10) gesendeten IPv6-Multicast-Adresse.

8. Home-Gateway nach Anspruch 4, wobei das DS-Lite-Tunnelmodul (30) ferner konfiguriert ist zum Senden der IPv4-Multicast-Datennachricht an das IPv4-Multicast-Routing-Modul (40).

## Revendications

1. Procédé de multidiffusion lite à double pile, DS-Lite, de passerelle domestique, le procédé comprenant :
l'ajout (S101), lors de la réception d'un message de demande de protocole de multidiffusion de Protocole Internet Version 4, IPv4, envoyé depuis un utilisateur, du message de demande de protocole de multidiffusion IPv4 à une passerelle domestique ; la conversion du message de demande de protocole de multidiffusion IPv4 en un message de protocole de multidiffusion de Protocole Internet Version 6, IPv6, et l'envoi du message de protocole de multidiffusion IPv6 à un routeur ;
la conversion (S102), lors de la réception d'un message de données de multidiffusion IPv6 envoyé depuis le routeur, du message de données de multidiffusion IPv6 en un message de données de multidiffusion IPv4 ; et le transfert du message de données de multidiffusion IPv4 à l'utilisateur,
dans lequel la conversion du message de demande de protocole de multidiffusion IPv4 en un message de protocole de multidiffusion IPv6 comprend : l'analyse du message de demande de protocole de multidiffusion IPv4 pour obtenir une adresse de multidiffusion IPv4 ; l'obtention d'une adresse de multidiffusion IPv6 en fonction de l'adresse de multidiffusion IPv4 et d'un préfixe de multidiffusion DS-Lite ; et l'obtention d'un message de protocole de multidiffusion IPv6 en fonction de l'adresse de multidiffusion IPv6,
dans lequel la conversion du message de données de multidiffusion IPv6 en un message de données de multidiffusion IPv4 comprend : la suppression d'un en-tête de message IPv6 du message de données de multidiffusion IPv6, pour obtenir le message de données de multidiffusion IPv4.

2. Procédé selon la revendication 1, comprenant en outre :
la réception (201) d'un message de sortie de protocole de multidiffusion IPv4 envoyé par l'utilisateur ;
l'analyse (202) du message de sortie de protocole de multidiffusion IPv4 pour obtenir une adresse de multidiffusion IPv4 ;
l'obtention (203) d'une adresse de multidiffusion IPv6 en fonction de l'adresse de multidiffusion IPv4 et d'un préfixe de multidiffusion DS-Lite ; et
la suppression (206) d'un groupe de multidiffusion correspondant à une adresse de multidiffusion IPv4 que l'utilisateur a besoin de quitter, et le fait d'informer le routeur d'un groupe de multidiffusion correspondant à une adresse de multidiffusion IPv6 que l'utilisateur quitte.

3. Procédé selon la revendication 1 ou 2, avant la conversion du message de données de multidiffusion IPv6 en le message de données de multidiffusion IPv4, comprenant en outre : l'exécution, lorsque le message de données de multidiffusion IPv6 est un message fragmenté, d'un regroupement de fragment sur le message de données de multidiffusion IPv6.

4. Passerelle domestique comprenant :
un module d'agent de multidiffusion (10), configuré pour ajouter, lors de la réception d'un message de demande de protocole de multidiffusion de Protocole Internet Version 4, IPv4, envoyé depuis un utilisateur, le message de demande de protocole de multidiffusion IPv4 à la passerelle domestique ;
un module de protocole de multidiffusion de Protocole Internet Version 6, IPv6, (20), configuré pour convertir le message de demande de protocole de multidiffusion IPv4 en un message de protocole de multidiffusion IPv6, et envoyer le message de protocole de multidiffusion IPv6 à un routeur ; et
un module de tunnel lite à double pile, DS-Lite, (30), configuré pour convertir, lors de la réception d'un message de données de multidiffusion IPv6 envoyé depuis le routeur, le message de données de multidiffusion IPv6 en un message de données de multidiffusion IPv4,
dans lequel lors de la conversion du message de demande de protocole de multidiffusion IPv4 en le message de protocole de multidiffusion IPv6, le module de protocole de multidiffusion IPv6 (20) est configuré pour analyser le message de demande de protocole de multidiffusion IPv4 pour obtenir une adresse de multidiffusion IPv4, obtenir une adresse de multidiffusion IPv6 en fonction de l'adresse de multidiffusion IPv4 et d'un préfixe de multidiffusion DS-Lite, et obtenir un message de protocole de multidiffusion IPv6 en fonction de l'adresse de multidiffusion IPv6,
dans lequel lors de la conversion du message de données de multidiffusion IPv6 en un message de données de multidiffusion IPv4, le module de tunnel DS-Lite (30) est configuré pour supprimer un en-tête de message IPv6 du message de données de multidiffusion IPv6, pour obtenir le message de données de multidiffusion IPv4.

5. Passerelle domestique selon la revendication 4, comprenant en outre :
un module de routage de multidiffusion IPv4 (40), configuré pour ajouter ou supprimer un item de routage de multidiffusion, et transférer le message de données de multidiffusion IPv4 par routage ; et
un module de pont (50), configuré pour recevoir le message de données de multidiffusion transféré par le module de routage de multidiffusion IPv4 (40), et transférer le message de données de multidiffusion IPv4 à l'utilisateur.

6. Passerelle domestique selon la revendication 4, dans laquelle, le module d'agent de multidiffusion (10) est en outre configuré pour recevoir un message de sortie de protocole de multidiffusion IPv4 envoyé par l'utilisateur ; analyser le message de sortie de protocole de multidiffusion IPv4 pour obtenir une adresse de multidiffusion IPv4 ; et obtenir une adresse de multidiffusion IPv6 en fonction de l'adresse de multidiffusion IPv4 et d'un préfixe de multidiffusion DS-Lite.

7. Passerelle domestique selon la revendication 4, dans laquelle le module de protocole de multidiffusion IPv6 (20) est en outre configuré pour recevoir l'adresse de multidiffusion IPv6 envoyée par le module d'agent de multidiffusion (10).

8. Passerelle domestique selon la revendication 4, dans laquelle, le module de tunnel DS-Lite (30) est en outre configuré pour envoyer le message de données de multidiffusion IPv4 au module de routage de multidiffusion IPv4 (40).
